# EUROPEAN PATENT SPECIFICATION

(11) **EP 0 450 497 B1**
(45) Date of publication and mention of the grant of the patent: **12.06.1996**
(21) Application number: 91104918.7
(22) Date of filing: 27.03.1991
(51) Int. Cl.: H04N 1/00

(54) **Facsimile apparatus**
Faksimilegerät
Dispositif de fac-similé

(30) Priority: 04.04.1990 JP 91172/90; 25.06.1990 JP 167431/90; 25.06.1990 JP 167432/90; 26.06.1990 JP 169509/90
(43) Date of publication of application: 09.10.1991
(73) Proprietor: SHARP KABUSHIKI KAISHA, Osaka 545 (JP)
(72) Inventor: Kotani, Matahira, Ikoma-gun, Nara-ken (JP)
(74) Representative: TER MEER - MÜLLER - STEINMEISTER & PARTNER

(56) References cited:
- EP-A- 0 262 839
- EP-A- 0 328 069
- DE-A- 3 930 624
- US-A- 4 878 238
- EUROCON 88, 8TH EUROPEAN CONFERENCE ON ELECTROTECHNICS, CONFERENCE PROCEEDINGS ON AREA COMMUNICATION, IEEE 13 June 1988 , STOCKHOLM, SWEDEN pages 379 - 382 HEINZ OCHSNER 'CORDLESS TELECOMMUNICATIONS: TOWARDS A DIGITAL STANDARD'

## Description

### BACKGROUND OF THE INVENTION

### 1. Field of the Invention

The present invention relates to a communication apparatus in accordance with the precharacterizing part of claim 1. Such a communication apparatus is known from EP-A-0 262 839.

### 2. Description of the Related Art:

In a conventional facsimile apparatus, a telephone unit, an image information transmission/reception unit, and a control unit for centrally controlling them are housed in a single housing. When a document (image information) is transmitted, the document is set on a document holder, and dial keys, a transmission indication key, etc. cf an operation panel of the conventional facsimile apparatus are operated. Monitoring is required to see if an error occurs while the document is being transmitted to a desired party at the other end of the line.

The above-mentioned EP-A-0 262 839 discloses an ordinary telephone as a fixed unit and a cordless telephone as a portable unit and a switching system between these two units. This known communication apparatus has no facsimile function.

DE-A-3 930 624 discloses a combination of a facsimile and a telephone function in one apparatus body.

### SUMMARY OF THE INVENTION

Accordingly, an object of the present invention is to provide a facsimile apparatus which solves the above-mentioned problem and has excellent operability.

The above object is solved by a communication apparatus provided with the telephone function for transmitting and receiving voice signals over a public telephone line, said communication apparatus comprising:
- a parent machine connected to said public telephone line, and having a telephone control and signal-processing function ; and
- a child machine linked with said parent machine by radio, and having said telephone function;
   **characterized in that** said parent machine has an additional facsimile function, and
- said parent machine notifies said child machine of completion of transmission or reception of image information when the transmission or reception of the image signal is completed.

Dependent claim 2 specifies an advantageous development thereof.

Further objects and advantages of the present invention will be apparent from the following description, when reference is made to the accompanying drawings wherein preferred embodiments of the present invention are clearly shown.

### BRIEF DESCRIPTION OF THE DRAWINGS

Fig. 1 is a block diagram of a cordless facsimile apparatus of a first embodiment of the present invention;
Figs. 2 through 5 are flowcharts showing the operation of the cordless facsimile apparatus of Fig. 1.

### DESCRIPTION OF THE PREFERRED EMBODIMENTS

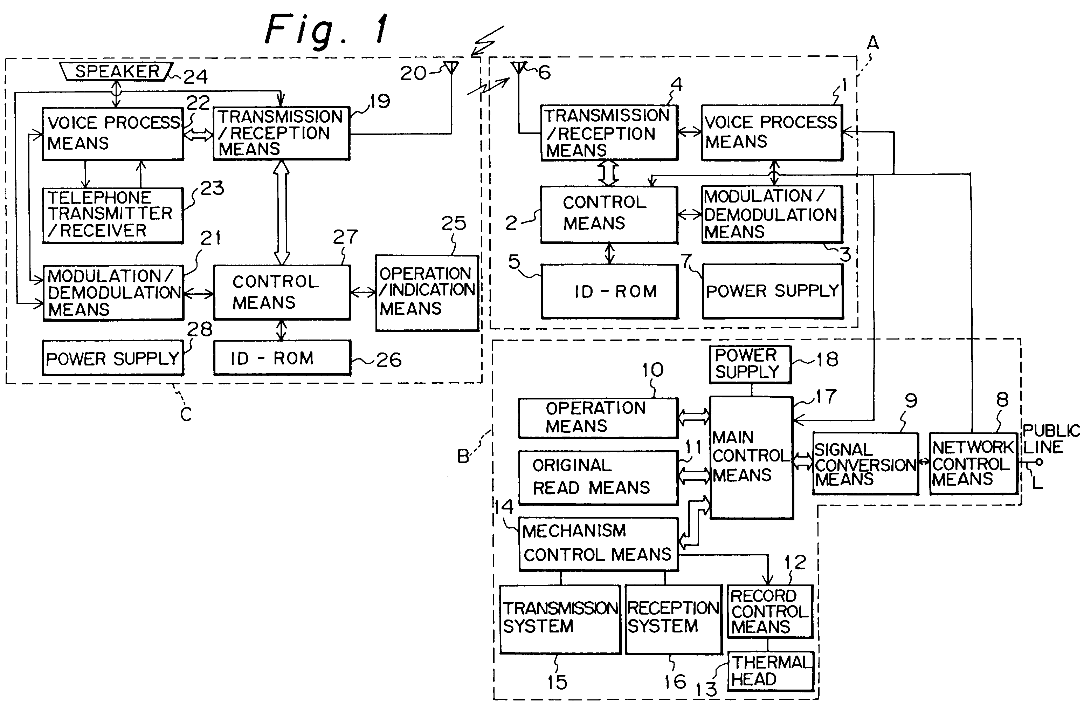

Fig. 1 is a block diagram of a cordless facsimile apparatus of an embodiment of the present invention. Reference character A denotes a telephone function unit of a parent machine of the cordless facsimile apparatus; B denotes a facsimile function unit of the parent machine; and C denotes a telephone function unit of a child machine. In the telephone function unit A of the parent machine, reference numeral 1 denotes a voice processing means for processing voice signals from a public telephone line and from the chile machine; 2 denotes a control means for supervising the termination of a calling signal from a public telephone line and the origination of voice signals to the public telephone line, and the control of the transmission and reception of radio signals and control signals to and from the chile machine; 3 denotes a modulation/demodulation means for converting voice signals from the voice processing means to radio signals and converting radio signals from the child machine to voice signals; 4 denotes a transmission/reception means for converting voice signals from the voice processing means 1 to radio signals and then transferring them to the child machine and for receiving radio signals from the child machine; 5 denotes an IDROM in which ID codes for confirming that the child machine is in a parent/child relationship with the parent machine are stored; 6 denotes an antenna, connected to the transmission/reception control means 4, through which radio signals are transmitted and received to and from the child machine; and 7 denotes a power supply means for supplying power to the above respective means.

In the facsimile function unit B of the parent machine, reference numeral 8 denotes a network control means for connecting the units mentioned below to the public telephone line in response to a line connection request from the telephone function unit A or from the facsimile function unit B, or in response to a request from the public telephone line for connection with the facsimile function unit or the telephone function unit, 9 denotes a signal conversion means for receiving analog signals from the network control means 8 and converting them to digital signals or converting the digital signals of image information (document), which is desired to be transmitted, to analog signals which can be sent out to the public telephone line; 10 denotes an operation means which indicates to whom transmission is made or the kind of transmission system, etc. at the time of facsimile transmission; 11 denotes a document reading means for reading a transmission document; 12 denotes a recording control means for recording received image information on recording paper; 13 denotes a recording head disposed i the recording control means 12; 14 denotes a mechanism control means for controlling the driving of the mechanism of the document reading means 11 and the recording control means 12 at the time of reading a document and of recording image information, this mechanism control means 14 being equipped with a document reading control system 15 and an image information reception/recording system 16; 17 denotes a main control means for supervising the control among the above respective means; and 18 denotes a power-supply means for supplying power to the above respective means.

In the telephone function unit C of the child machine, 19 denotes a transmission/reception means for receiving transmission signals from the parent machine via an antenna 20 and for transmitting the transmission signals from the chile machine to the parent machine; 20 denotes a modulation/demodulation means for demodulating radio signals received by the transmission/reception means 19 to voice signals and converting the voice signals to be transmitted to the parent machine into radio signals; 22 denotes a voice processing means for outputting signals which are received by the transmission/reception means 19 and converted into voice signals by the modulation/demodulation means to a speaker 24 or a handset (telephone receiver) 28; 25 denotes an operation indication means for indicating the input of the telephone number of a receiving party and various control signals at the time of telephone transmission or facsimile transmission; 26 denotes an IDROM in which ID codes for confirming that the child machine is in a master/slave relationship with the parent machine are stored; 27 denotes a control means for controlling the above respective means; and 28 denotes a power-supply means for supplying power to the above respective means.

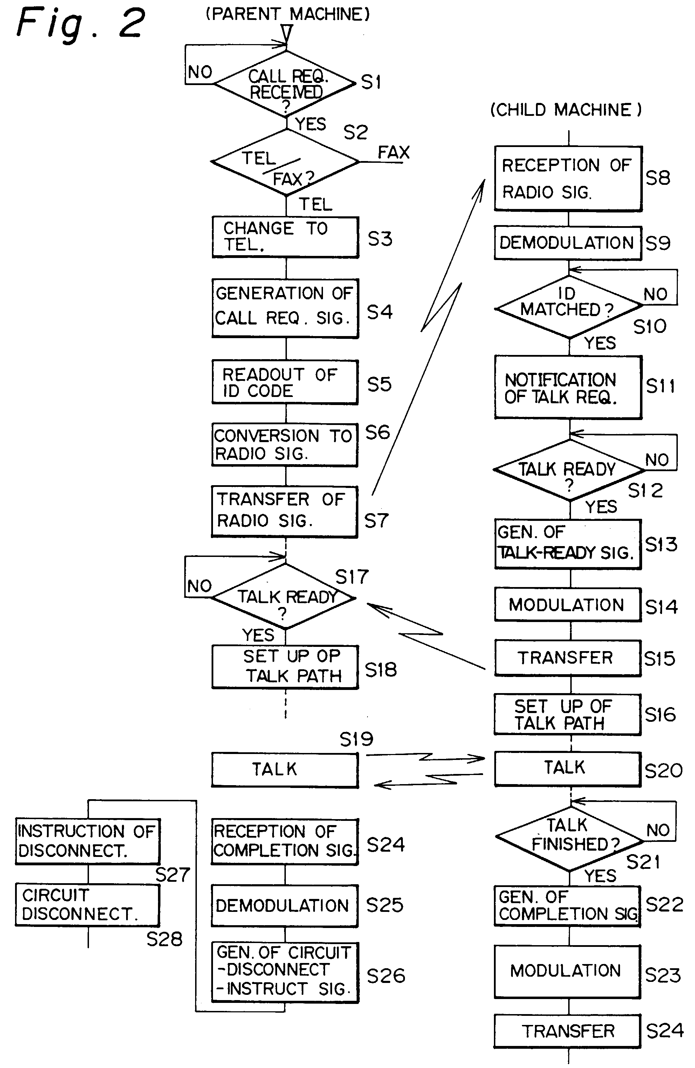

The specific operation of the facsimile apparatus having the above-described construction will now be explained in detail with reference to the flowcharts in Figs. 2, 3, 4 and 5.

### <Termination of a Telephone Call>

Fig. 2 is a flowchart showing the operation of the facsimile apparatus when a call termination request signal from a public telephone line is received. When a termination request signal enters from a public telephone line L, it is received by the network control means 8. In a case where it is a signal indicating a talk request, the network control means 8 connects the line with the telephone function unit A (step S1 → S2 → S3).

The control means 2 receiving this request generates a call request signals, reads out an ID code stored in the IDROM 5, and supplies this code to the modulation/demodulation means 3 together with the call request signal. The modulation/demodulation means 3 modulates these signals to radio signals. These radio signals are transferred from the transmission/reception control means 4 to a child machine via the antenna 6 (step S4 → S5 → S6 → S7).

The telephone function unit C of the child machine receiving these radio signals by means of the transmission/reception means 19, demodulates the signals by the modulation/demodulation control means, and checks whether the ID code signal received matches the one stored in IDROM 26. If a match is made, the transmission/reception means 19 notifies a user that a call request has occurred (Step S8 → S9 → S10 → S11).

If this call request is received and the apparatus is in a talk-ready state, the user operates the talk-key of the operation indication means 25. The control means 27 that has received this indication generates a talk-ready signal. The modulation/demodulation means 21 modulates this signal to a radio signal. The transmission/reception means 19 transfers it to the parent machine and sets the apparatus in a talk ready state (step S12 → S13 → S14 → S15 → S16).

The parent machine receiving this talk-ready signal likewise sets the apparatus in a talk-ready state (step S17 → S18).

In this way, when both machines are set to a talk-ready state, it is possible to talk with the caller (step S19 → S20).

Next, when the user operates the talk-completion key of the operation indication means 25 at the completion of the call, the control means 27 generates a talk-completion signal. The modulation/demodulation means 23 modulates this signal to a radio signal, and the transmission/reception means 19 transfers this signal to the parent machine (step S21 → S22 → S23 → S24).

In the parent machine receiving this talk-completion signal by means of the transmission/reception control means 4, the modulation/demodulation means 3 demodulates this signal, the control means 2 outputs a line disconnect instruction, and the network control means 8 disconnects the line (step S24 → S25 → S26 → S27 → S28).

### <Origination of a Telephone Call>

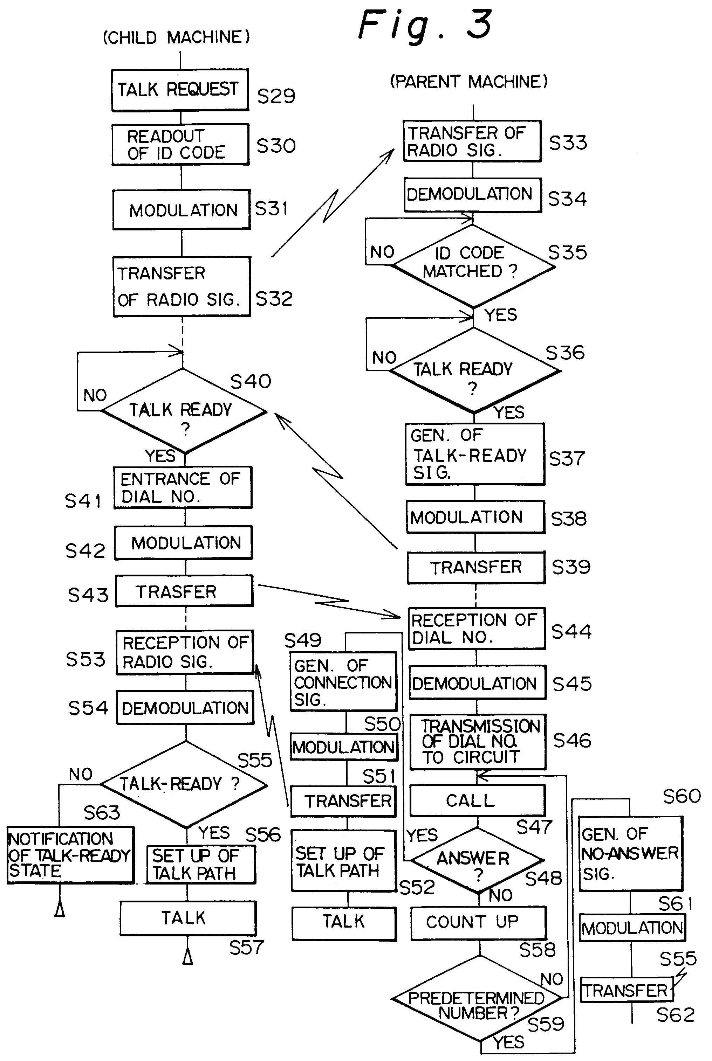

Figs. 3 is a flowchart showing an operation when conversation is initiated by using the child machine. When the call request key of the operation indication means 25 of the telephone function unit C of the child machine is operated, the control means 27 generates a talk-request signal, reads out an ID code stored in the IDROM 26, modulates this code by the modulation/demodulation means 21 and sends out this request signal to the parent machine via the antenna 20 from the transmission/reception means 29 (step S29 → S30 → S31 → S32).

This request signal is received by the transmission/reception control means 4 and demodulated by the modulation/demodulation means 3. The control means 2 compares the ID code stored in the IDROM 5 with the ID code received to check if they match each other (step S33 → S34 → S35).

When the ID code match occurs, the control means 2 checks whether facsimile transmission/reception is being performed by the facsimile function unit B of the parent machine. If it is not performing facsimile transmission/reception, the control means 2 generates a talk-ready signal, the control means 2 modulates this signal, and the transmission/reception control means 4 notifies the child machine. (step S36 → S37 → S38 → S39).

When this talk-ready signal is received and displayed, the user inputs the telephone number of the receiving party into the control means 27 through the operation indication means 25. This telephone number is modulated by the modulation/demodulation means 21 and is transmitted to the parent machine via the antenna 20 from the transmission/reception means 19 (step S40 → S41 → S42 → S43).

The parent machine that has received the above dial signal demodulates the dial signal by means of the modulation/demodulation means 3 and sends it out by means of the network control means 8 under the control of the control means 2 to the person at the other end of the line (step S44 → S45 → S46 → S47).

If the person at the other end of the line responds to the call, the control means 2 notifies the child machine of the fact and sets the apparatus to a talk-ready state (step S48 → S49 → S50 → S51 → S52).

The child machine thus notified sets the apparatus to a talk-ready state and conversation begins (step S53 → S54 → S55 → S56 → S57).

On the other hand, if there is no response to the call from the person at the other end of the line, the control means 2 repeats the calling operation a predetermined number of times. If there is still no response, it generates a control signal indicating the fact that there is no response and transfers the signal to the child machine (step S47 → S48 → S58 → S59 → S60 → S61 → S62).

The child machine thus notified communicates this information to the user by means of a speaker 24 or the like under the control of the control means 27 (step S55 → S68).

### <Facsimile Transmission>

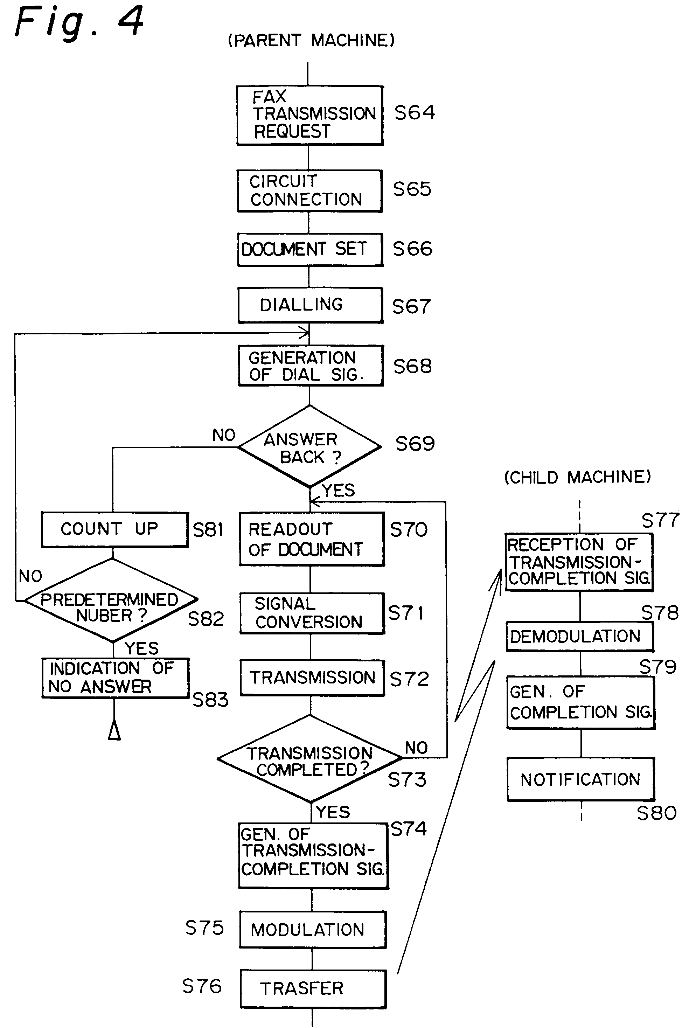

Fig. 4 is a flowchart showing the operation of the apparatus at the time of facsimile transmission. When a user desires to send a facsimile transmission, first, he or she operates the facsimile transmission indication key of the operation means 10 to notify the main control means 17 of the indication. The main control means 17 thus notified switches the public telephone line to the facsimile function unit by means of the network control means 8 (step S64 → S65).

Next, the user puts the document to be transmitted onto the document holder of the facsimile apparatus and inputs the telephone number of the receiving party into the main control means 17 via the operation means 10. The main control means 17 receiving this number generates a dial signal and sends it to the public telephone line L through the network control means 8 (step S66 → S67 → S68).

Next, the main control means 17 monitors whether there is an answer-back signal from the party called. If there is, the main control means 17 actuates the document reading means 11 to read it, converts the read signals to analog signals by the signal conversion means 9 and sends out them to the public telephone line through the network control means 8 (step S69 → S70 → S71 → S72).

On completion of the transmission of the document in this manner, the main control means 17 generates a transmission completion signal and notifies the control means 2 of the telephone function unit A. The control means 2 receiving this transmission completion signal modulates this information to radio signals by the modulation/demodulation means 3 and notifies the child machine about the same via the antenna 6 from the transmission/reception control means 4 (step S73 → S74 → S75 → S76).

The child machine receiving these radio signals demodulates the signals by means of the modulation/demodulation means 21 and notifies the user by means of the speaker 24 or the like under the control of the control means 27 that the transmission has been completed (step S77 → S78 → S79 → S80).

On the other hand, if there is no above answer-back signal, the main control means 17 repeats the call to the receiving party a predetermined number of times. If there is still no answer from the party called, this information is displayed or printed to inform the user about the same (step S68 → S69 → S81 → S82 → S83).

It should be noted that the lack of an answer can also be communicated to the child machine in the same manner.

### <Facsimile Reception>

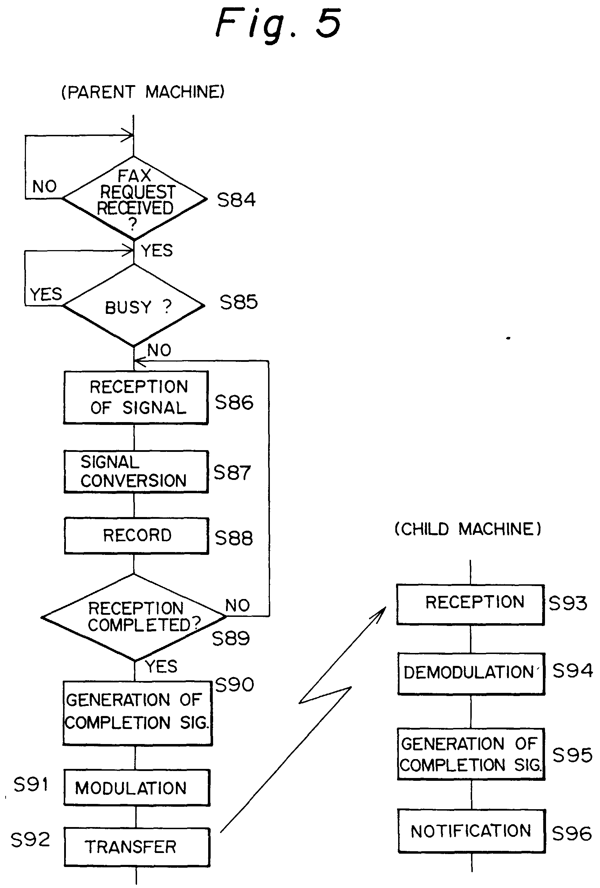

Fig. 5 is a flowchart showing the operation of the apparatus at the time of facsimile reception. When there occurs a facsimile transmission request from a public telephone line L, the network control means 8 under the control of the main control means 17 checks whether the apparatus is busy or not. If it is not busy, the network control means 8 connects the line with the facsimile function unit (step S84 → S85).

When the line is connected and image information is transmitted through the signal conversion means 9 in this manner, the main control means 17 actuates the recording control means 12 to reproduce the information on recording paper (step S86 → S87 → S88).

On termination of the reception of the signal, the main control means 17 generates reception completion signal to notify the control means 2 of the telephone function unit A. The control means 2 receiving this reception completion signal modulates this information to radio signals by means of the modulation/demodulation means 3 and notifies the child machine via the antenna 6 from the transmission/reception control means 4 (step S89 → S90 → S91 → S92).

The child machine receiving these radio signals demodulates the signals by means of the modulation/demodulation means 21 and notifies the user by means of the speaker 24 or the like under the control of the control means 27 that the reception has been terminated (step S93 → S94 → S95 → S96).

## Claims

1. A communication apparatus provided with the telephone function for transmitting and receiving voice signals over a public telephone line (L), said communication apparatus comprising:
- a parent machine (A, B) connected to said public telephone line, and having a telephone control and signal-processing function ; and
- a child machine (C) linked with said parent machine by radio, and having said telephone function;
**characterized in that** said parent machine (A, B) has an additional facsimile function, and
- said parent machine (B) notifies said child machine (C) of completion of transmission or reception of image information when the transmission or reception of the image signal is completed.

2. A communication apparatus as claimed in claim 1, **wherein** each of said parent machine and said child machine includes means for converting voice signals and dial signals to radio signals.

## Patentansprüche

1. Kommunikationsgerät, ausgestattet mit einer Telefonfunktion zur Übertragung und zum Empfang von Stimmsignalen über eine öffentliche Telefonleitung (L), mit:
- einer mit der öffentlichen Telefonleitung verbundenen Haupteinheit (A, B) mit einer Telefonüberwachungs- und Signalverarbeitungsfunktion; und
- einer mit der Haupteinheit durch Funkübertragung verbundenen Tochtereinheit (C) mit Telefonfunktion;
**dadurch gekennzeichnet**, daß die Haupteinheit (A, B) zusätzlich eine Faksimilefunktion hat, und
- daß die Haupteinheit (B) die Tochtereinheit (C) nach Ende der Übertragung oder dem Empfang des Bildsignals hierüber informiert.

2. Kommunikationsgerät gemäß Anspruch 1, worin sowohl die Haupteinheit als auch die Tochtereinheit über Einrichtungen zur Umwandlung von Stimm- und Wählsignalen in Funksignale verfügen.

## Revendications

1. Dispositif de communication équipé de la fonction de téléphone pour transmettre et recevoir des signaux vocaux sur une ligne téléphonique (L) du réseau public, ledit dispositif de communication comprenant:
une machine mère (A, B) connectée à ladite ligne téléphonique du réseau public, et ayant une fonction de commande de téléphone et de traitement de signal; et
une machine fille (C) reliée par radio à ladite machine mère, et ayant ladite fonction de téléphone;
caractérisé en ce que
ladite machine mère (A, B) possède une fonction de télécopie additionnelle, et
ladite machine mère (B) informe ladite machine fille (C) de la fin de la transmission ou de la réception d'informations d'image lorsque la transmission ou la réception du signal d'image est achevée.

2. Dispositif de communication selon la revendication 1, dans lequel ladite machine mère et ladite machine fille comprennent chacune des moyens pour convertir des signaux vocaux et des signaux de numérotation en des signaux radio.
